# EUROPEAN PATENT SPECIFICATION

(11) **EP 0 923 680 B1**
(45) Date of publication and mention of the grant of the patent: **13.11.2002**
(21) Application number: 97939741.1
(22) Date of filing: 02.09.1997
(51) Int. Cl.: F16D 41/12

(54) **RATCHET ONE-WAY CLUTCH ASSEMBLY**
KLINKENEINWEGKUPPLUNGSANORDNUNG
ENSEMBLE D'EMBRAYAGE A ROUE LIBRE A ROCHETS

(30) Priority: 03.09.1996 US 707104; 27.08.1997 US 917880
(43) Date of publication of application: 23.06.1999
(60) Divisional application: 01200306.7
(73) Proprietor: BorgWarner Inc., Sterling Heights, Michigan 48314 (US)
(72) Inventor: COSTIN, Daniel, P., Naperville, IL 60565 (US); BACON, Duane, A., Saline, MI 48176 (US)
(74) Representative: Lerwill, John
(86) International application number: US9715423
(87) International publication number: WO98010203

(56) References cited:
- EP-A- 0 471 349
- DE-C- 139 815
- DE-C- 375 047
- FR-A- 2 267 484
- GB-A- 1 598 908
- GB-A- 19 072 116
- US-A- 1 767 593
- US-A- 1 883 966
- US-A- 2 323 353
- US-A- 2 710 504
- US-A- 5 064 037
- US-A- 5 065 635
- US-A- 5 143 189

## Description

### Technical Field

The invention relates to ratchet one-way clutch assemblies with centrifugally engaging/disen-gaging pawls.

### Background Art

There are various types of one-way clutch assemblies in use today. Such clutch assemblies include sprag-type, roller-type, and pawl ratchet-type assemblies. All of these one-way clutch assemblies work satisfactorily depending upon the particular application in which they are used.

In certain transmissions, increased torque capacity is needed for one-way clutch assemblies. Space constraints also require that the size of the clutch assembly be retained within certain limits. Current one-way clutch assemblies with sprags or rollers are often insufficient to add increased load carrying capacity and still maintain the space constraints.

Pawl one-way clutch assemblies can add increased nominal load capacity for a given package size. The design limits of a ratchet-type pawl clutch assembly are dictated by contact stress between the pawls and the races and/or bending, shear, and hoop stresses generated within the races.

Ratchet clutch assemblies have at least one pawl which acts to lock two notched or pocketed races together in one direction and rotate freely in the other direction. In general, the differences between known ratchet clutch assemblies relate to the control of the movement of the pawls and the effect on that movement by centrifugal forces.

Ratchet clutch assemblies are shown, for example, in U.S. Patent Nos. 2,226,247, 3,554,340, and 5,449,057. Another ratchet clutch assembly is shown in British Patent No. 2116. The '340 patent discloses a free-wheeling bicycle hub assembly with a ratchet clutch. Under the action of centrifugal forces at high speed, the pawls can be thrown out of the joints and suffer extreme wear.

The '247 patent discloses another bicycle free-wheeling hub assembly with a ratchet clutch assembly. The pawls have a rectangular cross-section and are positioned loosely in the pockets in order to move freely. The looseness makes the position of the pawl center of mass and thus the movement of the pawl uncontrollable.

In the '057 patent, the motion of the pawls is controlled by pivoting axles that pass through the pawls. The axles are positioned on a retainer and add complexity and cost to the design. It is also difficult to position the holes in the pawls for the axles with sufficient precision for high speed operation.

In the British 2116 patent, the pawls are mounted on axles positioned on a retainer. The axles again add complexity and cost to the design. Also, centrifugal loading during high speed operation will create high forces on the axles and could adversely affect the operation of the clutch.

Other known ratchet clutch mechanisms are shown in EP 0471 349 and DE 375 047 which respectively describe ratchet mechanisms in which pawls are biased to an engaged position by a spring and by centrifugal forces. DE-C-375 047 showing a one-way ratchet clotch according to the preamble of claim 1.

It is an object of the present invention to provide improved ratchet one-way clutch assemblies. It is another object of the present invention to provide improved ratchet clutch assemblies which have improved operation at high speeds.

The above and other objects of the invention are met by the present invention which is an improvement over known ratchet one-way clutch assemblies, including those discussed above.

The present invention provides a one-way ratchet clutch assembly comprising: an outer race member having a plurality of pockets; an inner race member having a plurality of notches; a plurality of pawl members, one of said pawl members being positioned freely in each of said pockets:
said pawl members being retained in said pockets during rotation of one of said race members in one direction relative to the other of said race members, and at least one of said pawl members being engaged with one of said notches when said race members are rotated relative to each other in the opposite direction; and means for directing said pawl members toward engagement with said notches; said means for directing said pawl members toward engagement with said notches comprising a ridge member, on each of said pawl members, a corresponding mating recess in each of said pockets, and a configuration of each of said pawl members which positions the center of mass (CM) thereof relative to said ridge member such that centrifugal force causes the pawl member to move toward the engaged position, the recess in each pocket being formed between two side surfaces that are at an obtuse angle to each other and arranged for contact with corresponding surfaces of the pawl member in the engaged and disengaged positions thereof, respectively,
characterised in that said corresponding surfaces of the pawl member are at an obtuse angle to each other with a rounded corner therebetween forming the ridge member.

The recess in the outer race pocket is located relative to the center of mass of the pawls in order to control the engaging force. This is necessary for high speed durability.

Spring members, such as garter springs, coil springs, ribbon springs, etc. can be used to exert tilting or biasing forces on the pawls toward engagement. The spring forces can be applied on a center groove or one or more side grooves in the pawls, or the spring forces can act on the pawl members themselves or in recesses that extend axially along the length of the pawl.

Other embodiments of the invention utilize one or more axial retainment devices. These devices include pairs of washers, or plastic retainers with axial extending flange members. The devices retain the pawls axially and also hold the races in axial radial alignment, while allowing relative rotation. The retainment devices also act as thrust bearings and can retain required lubrication to prevent excessive wear of the pawls.

The inner race member can be eliminated and the notches incorporated directly into a central shaft member or the like. This could cause savings in materials, manufacturing time and expense.

The present invention ratchet one-way clutch assembly has particular use in vehicle transmissions and can be used in environments where both races rotate or where the inner race is fixed. The invention can also be used in any mechanism where a positive backstop is desired to prevent undesired reverse or backward rotation, such as in an escalator mechanism or the like.

Other features, benefits and advantages of the present invention will become apparent from the following description of the invention, when viewed in accordance with the attached drawings and appended claims.

### Brief Description Of The Drawings

FIGURE 1 illustrates a ratchet one-way clutch assembly in accordance with the present invention;
FIGURE 2 is an enlarged view of a portion of the clutch assembly shown in Figure 1;
FIGURES 3 and 4 illustrate an alternate embodiment of the present invention which utilizes spring members, with Figure 4 being an elevational view and Figure 3 being an exploded view thereof;
FIGURES 5 and 6 show partial cross-sectional views of the embodiment shown in Figure 4, the cross-sectional views being taken along lines 5-5 and 6-6, respectively, in Figure 4 and in the direction of the arrows;
FIGURE 7 is an enlarged view of a portion of the clutch assembly embodiment shown in Figure 4;
FIGURES 8, 9 and 10 illustrate various embodiments of pawl members for use with a first spring-type embodiment of the present invention;
FIGURES 11 and 12 illustrate an embodiment of pawl members for use with a second spring-type embodiment of the present invention;
FIGURES 13 and 14 illustrate a still further embodiment of the present invention, with Figure 14 being an elevational view and Figure 13 being an exploded view thereof;
FIGURES 15 and 16 show partial cross-sectional views of the clutch assembly shown in Figure 14, the cross-sectional views being taken along lines 15-15 and 16-16, respectively, in Figure 14 and in the direction of the arrows;
FIGURE 17 is an enlarged view of a portion of the clutch assembly embodiment shown in Figure 14;
FIGURES 18 and 19 depict another ribbon spring embodiment of the present invention;
FIGURES 20 and 21 depict a coil spring embodiment in accordance with the present invention;
FIGURE 22 illustrates an embodiment of the invention wherein the pawl pockets are incorporated directly in a stator/reactor assembly;
FIGURE 23 is a cross-sectional view of the assembly of Figure 22, the cross-sectional view being taken along line 23-23 in Figure 22 and in the direction of the arrows;
FIGURE 24 shows an alternate embodiment of the assembly shown in Figures 22-23;
FIGURE 25 is an enlarged view of a portion of the assembly shown in Figure 24;
FIGURE 26 is a perspective view of the reinforcing members utilized in the embodiment shown in Figures 24-25;
FIGURE 27 illustrates an embodiment of the present invention wherein the engaging notches for the pawl members are incorporated directly on a shaft member;
FIGURE 28 illustrates a preferred embodiment of pawl and pocket members for use with the present invention; and
FIGURE 29 depicts another alternate embodiment of the invention.

### Best Mode(s) For Carrying Out The Invention

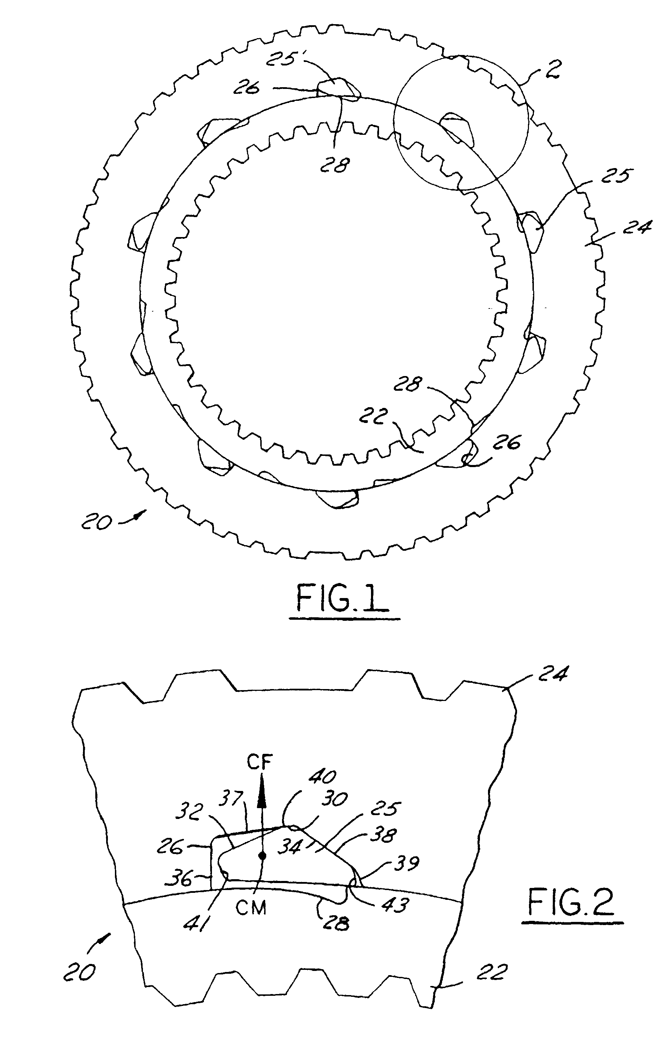

Figure 1 schematically illustrates a ratchet one-way clutch assembly 20 in accordance with the present invention. The assembly 20 includes an inner race 22, an outer race 24, and a plurality of individual pawl members 25. The pawl members 25 are positioned in pockets 26 in the outer race member. A plurality of notches 28 are positioned in the outer circumference or periphery of the inner race 22.

When the motion of the inner race 22 relative to the outer race member 24 is in the clockwise direction in Figure 1, the inner race rotates freely. When the relative motion of the inner race member 22 relative to the other race member 24 is counter-clockwise, the inner race and outer race are locked together by one of the pawls 25. In this regard, in Figure 1, the locked pawl is indicated by the reference numeral 25'. The pawl 25' transmits force through pocket 26 in the outer race and notch 28 in the inner race.

In the clutch assembly shown in Figure 1, ten pockets 26 and ten pawl members 25 are shown, together with eleven notches 28 in the inner race 22. Although the embodiment shown in Figure 1 only shows one pawl 25' in engagement, more than one pawl can be engaged at one time if the number of pawls and notches are both wholly divisible by a common denominator other than one.

Figure 2 is an enlarged view of a portion of the clutch assembly shown in Figure 1. The pawl 25 shown in Figure 2 is depicted in the free-wheeling position. In accordance with the present invention, the cross-section of the pawl 25 has a peak or pivot ridge 30 formed by the intersection of two substantially flat sides 32 and 34. The peak 30 of the cross-section forms a pivot ridge with the outer race pocket 26 which is shaped to receive the pawl. In this regard, the pocket 26 has substantially straight sides 36, 37, 38 and 39.

Preferably, in accordance with the present invention, the center of mass (CM) of the pawl 25 is positioned to the left of the pivot ridge 30 as viewed in accordance with Figure 2. In this manner, as the clutch assembly 20 rotates, a centrifugal force (CF) on the center of mass (CM) causes the pawl 25 to move toward the engaged position, that is, the position where it would be engaged with notch 28 in the inner race 22. The torque on the pawl 25 is proportional to the tangential distance of the CM away from the ridge 30.

Although the embodiment of the invention shown in Figures 1 and 2 shows a pawl member with the center of mass positioned, together with the pocket in the outer race, such that the pawl has a tendency to move toward the engaged position, other embodiments can be utilized in accordance with the present invention. For example, the geometry of the pawl can be changed to provide a pawl with a disengaging tendency. In this manner, the CM could be positioned to the right of the pivot ridge 30.

The pocket 26 in the outer race also has a peak or recess 40 which mates with the pivot ridge 30 of the pawl member 25. The peak 40 in the pocket holds the pawl 25 in the proper circumferential location for free movement in the pocket. This prevents the ends 41 and 43 of the pawl member 25 from coming in contact with the sides 36 and 39, respectively, of the pocket. If the ends of the pawl were to contact the adjacent areas of the outer race pocket, friction could slow the movement of the pawl toward engagement. In accordance with the preferred use of the present invention, it is necessary for the pawls to rotate into engagement with the inner race as quickly as possible.

With the present invention, the ridge on the pawl is precisely located relative to the center of mass of the pawl, regardless of the exact location of the pawl with respect to the outer race. This allow precise control of the engaging force, which is preferred for high speed operation. This is also accomplished with a relatively simple geometry which does not include an axle, separate pivot member, or the like. Moreover, the outer race pocket is shaped such that it also has a corresponding peak or recess, which retains the pawl in a precise location in the pocket. This location prevents the pawl from contacting the sides or ends of the pocket as it rotates toward engagement.

Preferably, the pawl members 25 are made of a hardened steel material and formed by pieces cut from a drawn wire. This allows precise control of the geometry of the pawl, and also allows precise control of the center of mass relative to the peak or pivot ridge 30. In this regard, with the present invention, it is possible to control the center of mass within a tolerance of 0.001 inches (0.0025 cm).

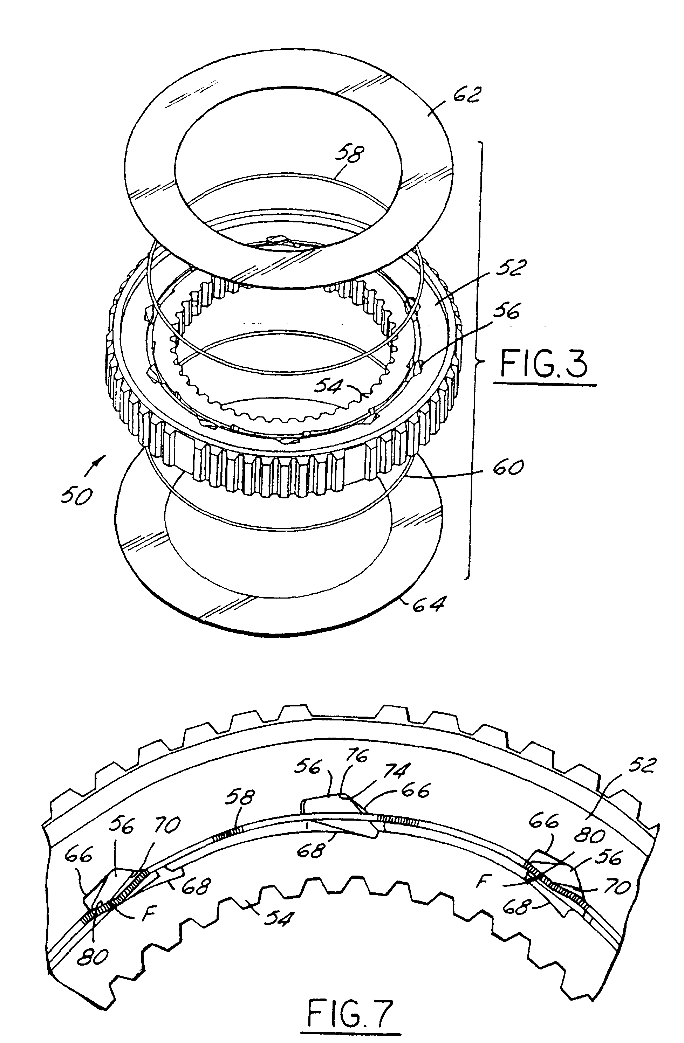

Another embodiment of the present invention is shown in Figures 3-8. This embodiment is referred to generally by the reference numeral 50 in the drawings. In the one-way ratchet clutch assembly 50, a spring is used to provide a tilting force on the pawl members toward engagement. A spring is particularly needed for pawls which are disengaged centrifugally, as well as for engaging pawls that must engage when the outer race is stationary. In Figures 3-8, the assembly 50 includes an outer race member 52, an inner race member 54, a plurality of pawl members 56, and a pair of garter springs 58 and 60. A pair of retainment washers 62 and 64 are also provided in the embodiment shown in Figure 3 and are discussed further below.

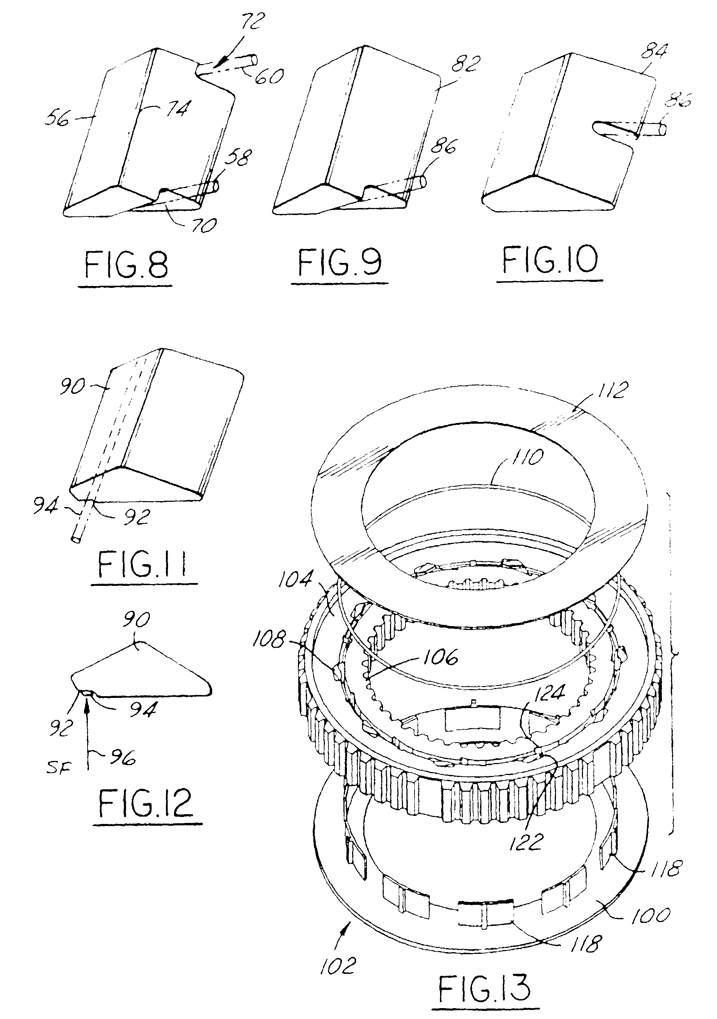

As shown more particularly in Figure 7, the pawl members 56 are positioned in pockets 66 in the outer race members 52 and are adapted to engage with notches 68 in the inner race 54. The garter springs 58 and 60, only one of which is shown in Figure 7, are made from a small coil of wire and are commonly available. For the embodiment shown in Figure 3 which utilizes two garter springs 58 and 60, pawl member 56 is utilized as shown in Figure 8. The pawl member 56 has a pair of recesses or side grooves 70 and 72. The garter springs 58 and 60 are positioned in the grooves 70 and 72 when the pawl members are positioned in the outer race. The remainder of the pawl members 56 have sizes and shapes similar to pawl members 25 described above with respect to Figures 1 and 2. In this regard, the pawl members have a pivot ridge 74 which mates with a peak or recess 76 in the pocket 66.

The operation of the spring members 58 and 60 is shown with reference to spring 58 and pawl members 56 in Figure 7. In this regard, when the pawl members are in their disengaged position, the garter spring 58 provides a force toward outer race member and thus toward the engaging position of the pawl member. This spring provides a force F (as shown in Figure 7) against surface 80 of each of the pawl members. When the pawl members 56 are in their engaged positions, that is mated with notches 68 in the inner race, the spring member 58 is relaxed and does not provide a spring force on the pawl members. This is shown with respect to the center pawl member 56 in Figure 7.

The spring force can also be arranged to act on a single side groove or a center groove of the pawl geometry. This is shown in Figures 9 and 10, respectively, where the pawl members are referred to by the reference numbers 82 and 84. The garter spring is indicated in phantom lines and is referred to by reference numeral 86. If either of the pawl embodiments shown in Figures 9 and 10 are utilized with the embodiment of the invention shown in Figures 3-7, then the position of the ribbon spring and the number of ribbon springs provided is adjusted accordingly.

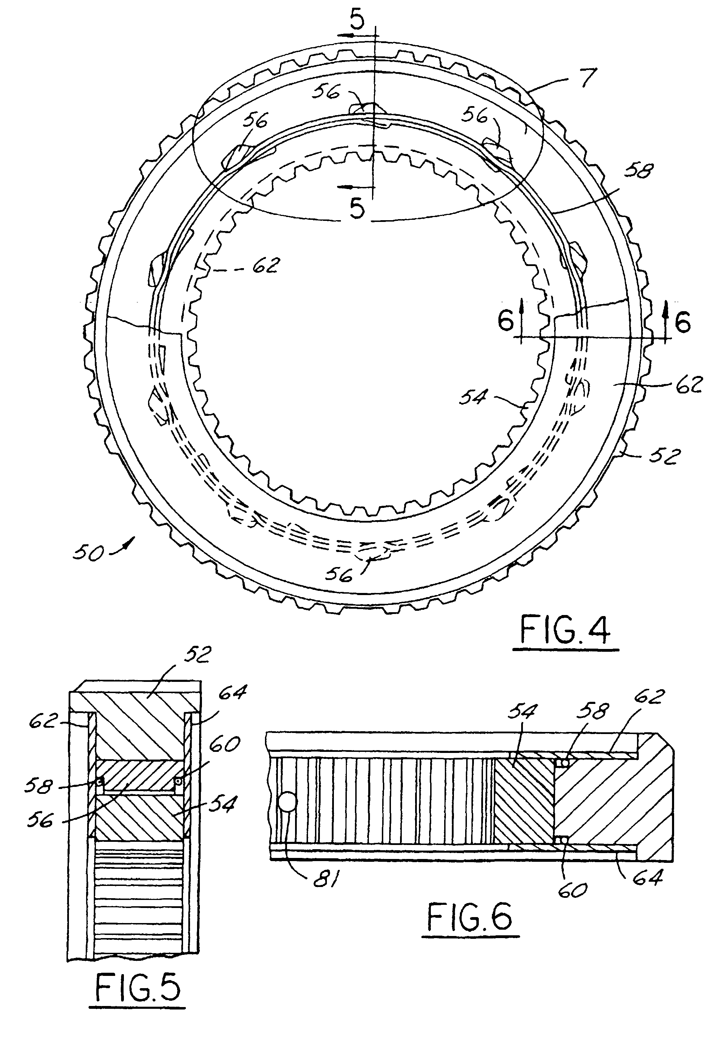

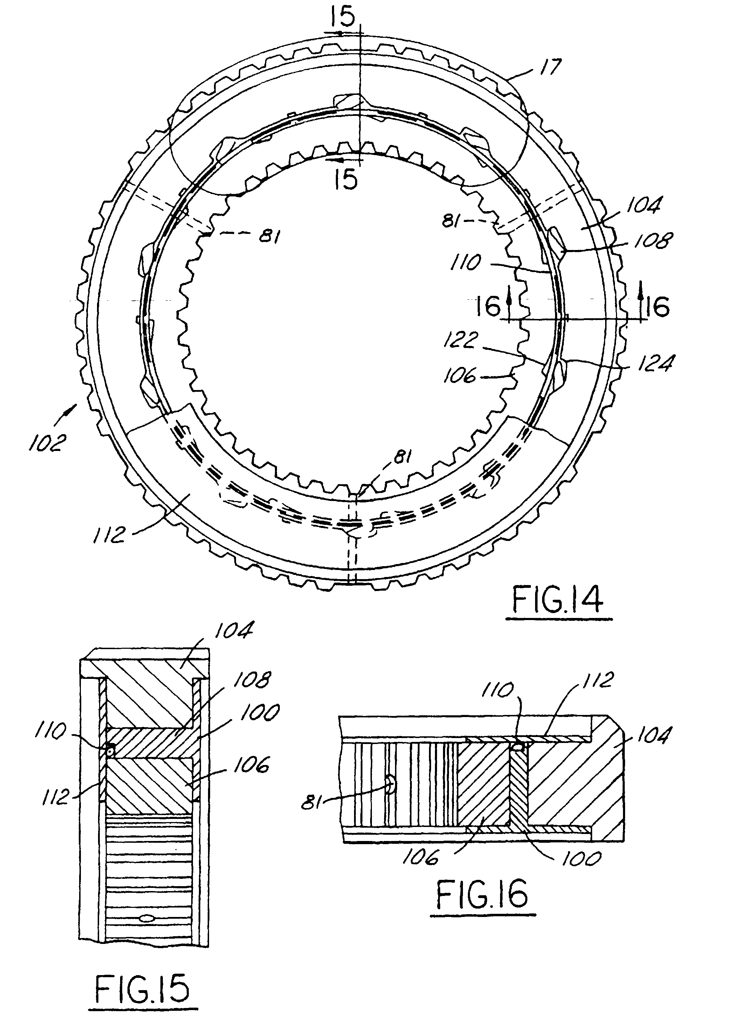

Opening or aperture 81 in the drawings (Figure 6) provides an access hole for lubrication relative to the transmission or other mechanism in which the one-way clutch assembly 50 is utilized. Preferably, several access holes are provided in the clutch assembly, such as the three openings 81 shown in Figure 14.

The spring force on the pawl members can also be applied in another manner. As shown in Figures 11 and 12, the pawl member 90 has a longitudinally or axially extending groove 92. A small ribbon spring 94 is utilized to provide a spring force (SF) in the direction of arrow 96. The ribbon springs 94 are preferably cut from thin strips of spring steel material and are positioned in the grooves 92 in order to provide a force SF toward engagement of the pawl members 90.

The washers 62 and 64 are also known as axial retainment devices or members and can be used to improve or enhance the operation of the present invention. The members 62 and 64 retain the pawl members axially (longitudinally) in the clutch assemblies. The retainment members also hold the inner and outer races in axial alignment, while allowing free relative rotation. Moreover, the axial retainment members act as thrust bearings between the clutch assembly and external parts of the mechanism that are rotating relative to the clutch assembly and must carry an axial load through the assembly. Finally, the axial retainment members (washers) 62 and 64 can retain lubrication in the clutch assembly which is required to prevent excess wear of the pawl members.

The washers 62 and 64 can be connected to the outer race through a press-fit arrangement, staking, welding, or mechanical fastening in any conventional manner.

An injection molded plastic retainer member can also be utilized. Such a member 100 is shown in Figures 13-17. In these Figures, the one-way ratchet clutch assembly is referred to generally by the reference numeral 102. Together with the retainer member 100, the assembly 102 includes an outer race member 104, an inner race member 106, a plurality of pawl members 108, a garter spring member 110 and a second retainment member 112.

In this regard, in the embodiment of the invention shown in Figures 13-17, the pawl members 108 can be of any of the types shown and described earlier. In addition, the pawl members 108 are contained in pockets 120 in the outer race member and engage notches 122 in the inner race member, in the same manner described above with reference to the other Figures.

The retaining member 100 has a plurality of flanges or upstanding arcuate-shaped guide members 118 situated to be positioned within the annular space between the inner and outer races 106 and 104, respectively. The member 100 is a radial bearing retainer for the pawls and the race members, and also acts as a lube dam for lubrication. The retainer members 100 and 112 are preferably attached together to retain the clutch assembly together axially. The retainer members also act as thrust bearings between the assembly and external parts of the mechanism that are rotating relative to the clutch assembly and carry axial loads through the assembly. Preferably, the retainer member 100 is made from an injection molded plastic material, and also preferably has a low friction coefficient so that it can provide improved bearing performance over regular steel-on-steel bearings. The retainer members 100 and 112 can be connected together in any conventional manner, such as a press-fit arrangement, staking, ultrasonic welding, mechanical fastening, and the like.

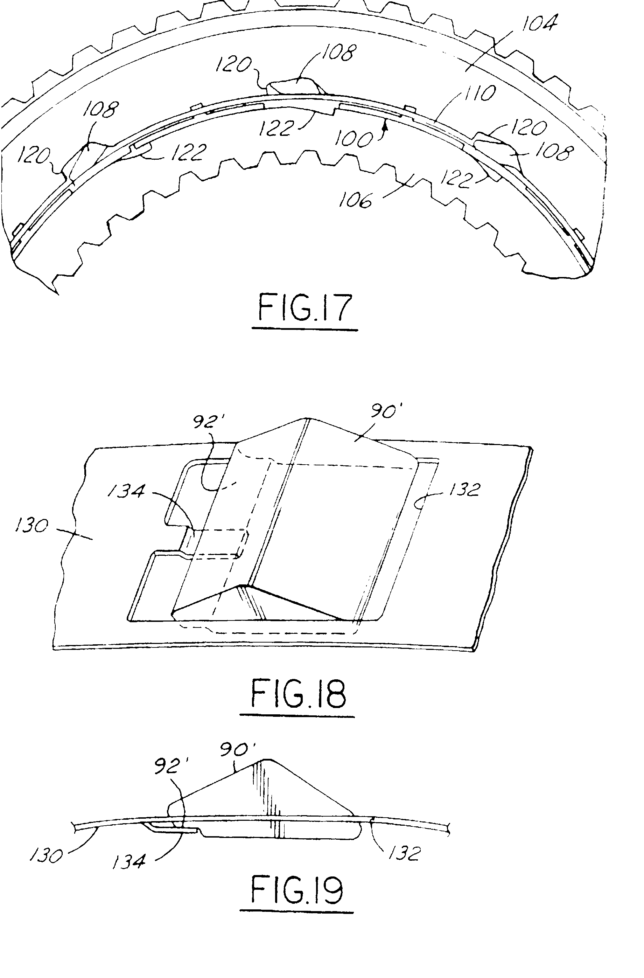

Another ribbon spring embodiment in accordance with the present invention is shown in Figures 18 and 19. In this embodiment, pawl members 90' are utilized which are the same as pawl members 90 described earlier. The members 90' have an axial groove 92'. A ribbon spring member 130 has an annular circular shape and is adapted to fit between the inner and outer race members of the clutch assembly. The spring member 130 is preferably made of spring steel and has a plurality of openings or windows 132 (only one of which is shown), each with a tab member 134. The pawl members 90' are positioned in the openings 132 and the tab members are positioned in the grooves 92'. The ribbon spring member 130 through the tab member 134 provide a biasing force on the pawl members 90' toward engagement with the notches on the inner race member.

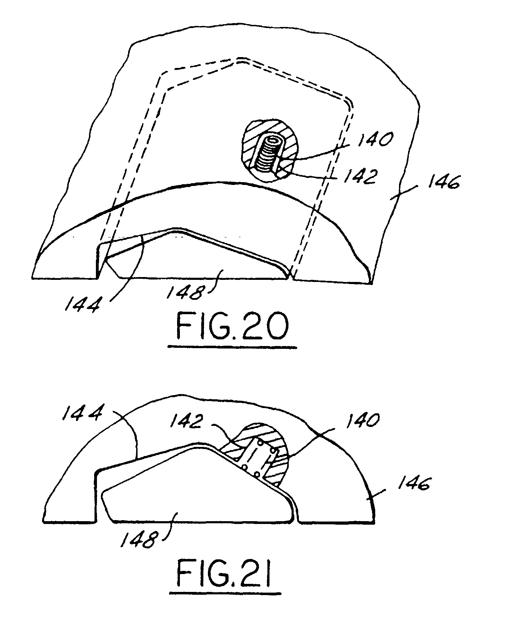

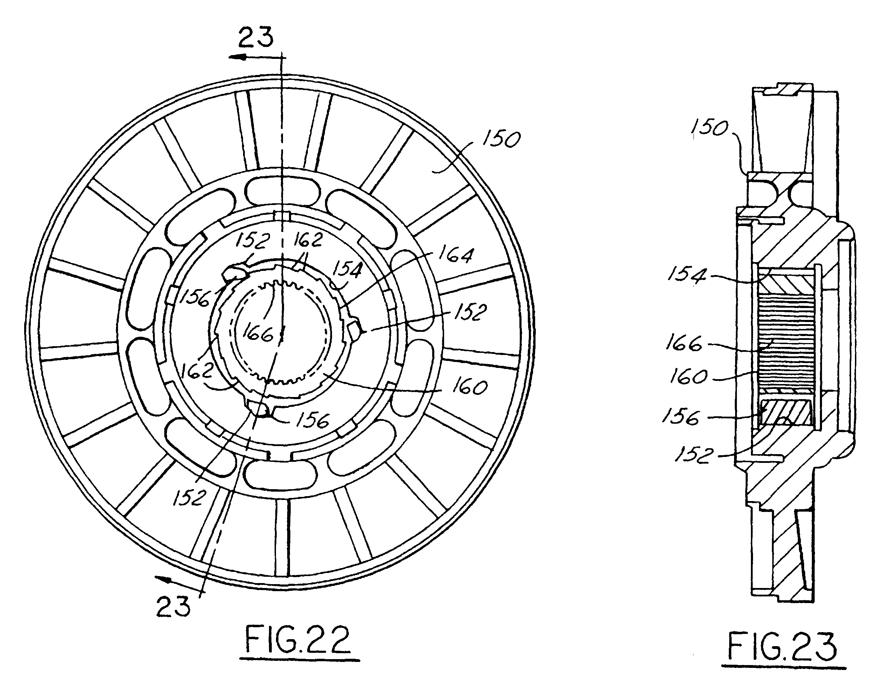

In accordance with the spirit and scope of the present invention, the spring mechanism for biasing the pawl members toward engagement with the inner race notches can have a wide variety of forms. Other than garter and ribbon springs described above, other spring members, such as coil springs, leaf springs, and the like could be utilized and fall within the scope of the present invention. For example, in this regard, a coil spring embodiment is shown in Figures 20 and 21. One or more coil springs 140 are positioned in recesses or bores 142 which connect to pockets 144 in the outer race member 146. The coil springs 140 bias the pawl members 148 radially inwardly toward the inner race member.

Alternate embodiments for use with the present invention are shown in Figures 22-28. These embodiments can provide improved economies in cost, manufacture and assembly procedures, as well as improved performance.

As shown in Figures 22-23, the pawl pocket members are incorporated directly as part of a stator or reactor member 150 for a torque converter or the like. The member 150 can be any integral part which would require a one-way clutch mechanism. Preferably, the member 150 is made from an aluminium, plastic or another material which can be case and machined relatively easily. A plurality of pocket members 152 are formed and/or machine directly into the inner diameter surface 154 of the member 150. The pawl member 156, which are positioned in the pockets 152, can be of any of the types shown and described herein, and can be urged toward the engaged positioned by predetermined positioning of the center of mass CM, or by one of the various types of spring members or mechanisms, all as discussed herein. Assemblies in which the outer member does not rotate are not in accordance with the invention as claimed.

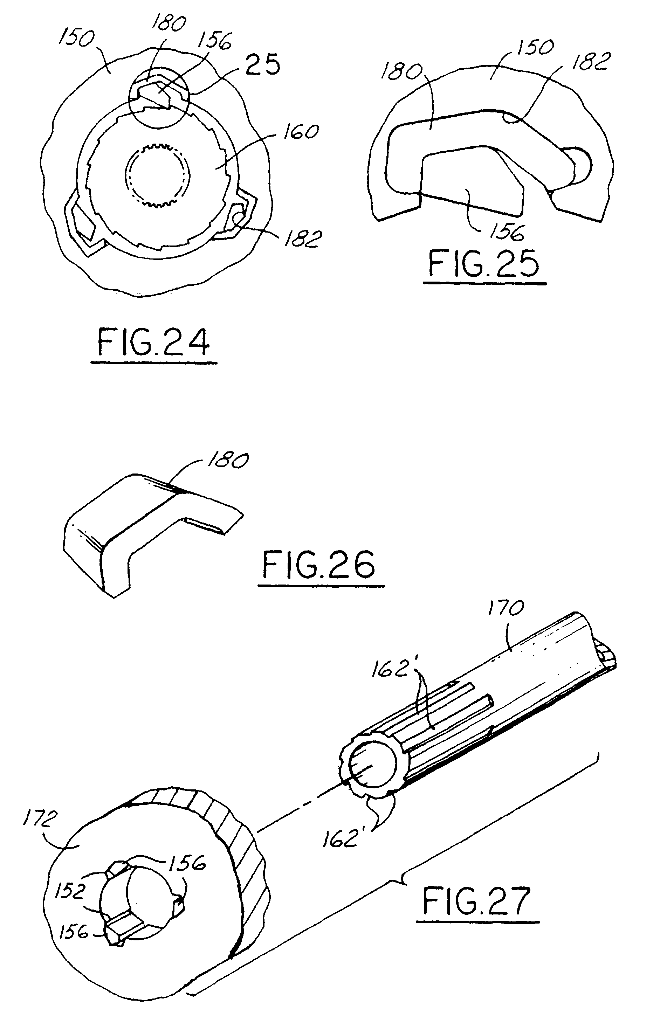

The inner member 160 can be any typical inner race member of the type discussed above with a plurality of locking notches 162 positioned around its outer circumference 164. Alternatively, the central shaft member which typically mates with the inner race member by mating teeth or spline members 166 or the like, can have the notches machined or formed directly on the outer circumference of the shaft, thereby eliminating the inner race member. Such an embodiment is shown in Figure 27 wherein a plurality of notches 162' are provided on shaft member 170, which typically is hollow, and the shaft member is then mated with member 172 which can be an outer race member, a stator or reactor member, or the like. Shaft member 170 can be, for example part of a vehicle transmission.

Any number of pockets and notches can be provided as desired by the clutch designer and/or in accordance with the operating specifications and parameters for the clutch mechanism. In the embodiment shown in Figures 22-23, three pockets and pawl members are provided and uniformly spaced around the inner circumference/diameter of the outer member 150. In order to effectively and efficiently mate with this number of pawl members and to'allow the clutch mechanism to lockup in the desired time with limited backlash (e.g. seven degrees), preferably seventeen notches are provided in the inner member.

Figures 24-26 depict an alternate embodiment of the invention in which insert members 180 are provided. The insert members 180 are made from steel or another hard or hardened material and are used to prevent damage to softer materials which might be utilized for the outer stator, reactor or other member 150 when the clutch mechanism is utilized. The inserts can be made of stamped steel or the like.

The pocket members 182 in the member 150 are provided with a larger space or area to allow positioning of the insert members 180 therein. The insert members are press fit, swedged or otherwise permanently secured in the pockets 182. The pawl members 156 are positioned inside the cupped insert members as shown.

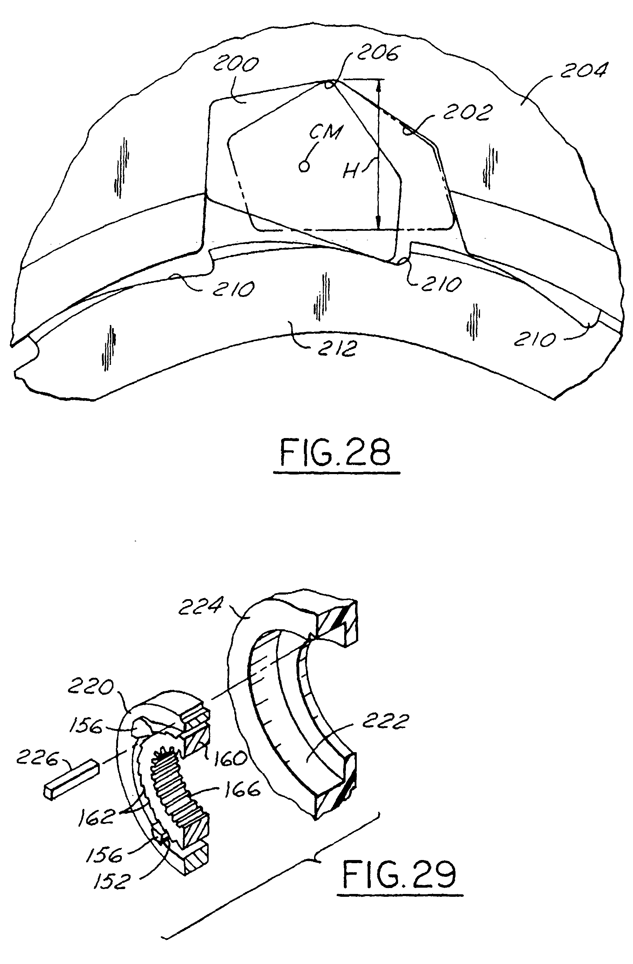

Another preferred embodiment of the present invention is shown in Figure 28. In this embodiment, the pawl member 200 has a different size and shape from the pawl members shown above. In particular, the pawl members 200 have a greater height H in the radial direction. This is to increase the load-carrying capacity of the clutch mechanism.

As with the other embodiments presented above, the pawl member 200 is positioned in a pocket 202 in an outer member 204, which can be an outer race, a stator or reactor, or the like. The center of mass CM of the pawl member 200 is preferably positioned as shown relative to the peak or pivot ridge 206 such that a pawl engaging force is generated upon rotation of the outer member 204. Similarly, a plurality of notches 210 are formed in the inner member 212, which can be an inner race, a shaft member, or the like.

It is also possible to utilize one of the spring members or mechanisms of the types and embodiments discussed above in order to assist in providing a tilting force on the pawl members 200 toward engagement. The use of retainment washers or thrust bearings on one or more sides of the ratchet one-way clutch mechanism shown in Figure 28 could also be provided. Appropriate lubrication channels and openings could further be provided as are conventionally utilized in the clutch art.

As an additional embodiment, it is also possible to provide the outer member as an insert which is combined with a stator, reactor or other mechanical member. This is shown in Figure 29. The outer member 220 has an annular shape and is adapted to fit within cavity or recess 222 in the stator, reactor or other member 224. The outer member 220, which preferably is made from a metal material, can be press fit or keyed by key member 226 into the member 224. In this manner, the member 224 can be made from a lower cost material, such as a plastic material. The other portion of the clutch mechanism, including the inner member 160, pawl members 156 and the like are the same as those set forth above.

While the best modes for carrying out the present invention have been described in detail herein, those familiar with the art to which this invention relates will recognize various alternate designs and embodiments for practicing the invention as defined by the following claims. All of these embodiments and variations that come within the scope and meaning of the present claims are included within the scope of the present invention.

## Claims

1. A one-way ratchet clutch assembly (20; 50; 102) comprising:
an outer race member (24; 52; 104; 150; 204; 220) having a plurality of pockets (26; 66; 120; 182);
an inner race member (22; 54; 106; 160; 212) having a plurality of notches (28; 68; 122; 162; 210);
a plurality of pawl members (25; 56; 108; 156; 200), one of said pawl members being positioned freely in each of said pockets:
said pawl members being retained in said pockets during rotation of one of said race members in one direction relative to the other of said race members, and at least one of said pawl members being engaged with one of said notches when said race members are rotated relative to each other in the opposite direction; and
means for directing said pawl members toward engagement with said notches;
said means for directing said pawl members toward engagement with said notches comprising a ridge member (30; 74; 206), on each of said pawl members, a corresponding mating recess (40; 76) in each of said pockets, and a configuration of each of said pawl members which positions the center of mass (CM) thereof relative to said ridge member such that centrifugal force causes the pawl member to move toward the engaged position, the recess (40; 76) in each pocket being formed between two side surfaces (37, 38) that are at an obtuse angle to each other and arranged for contact with corresponding surfaces (32, 34) of the pawl member in the engaged and disengaged positions thereof, respectively, **characterised in that** said corresponding surfaces (32, 34) are at an obtuse angle to each other with a rounded corner therebetween forming the ridge member.

2. A one-way ratchet assembly according to claim 1 wherein in each pocket the recess (40; 76) mates with a pivot ridge on the pawl member, the recess being positioned so as to prevent contact between the ends (41, 43) of the pawl member and the sides (36, 39) of the pockets during movement of the pawl member towards the engaged position.

3. The one-way ratchet clutch assembly of claim 1 or 2 wherein the pawl members are urged toward engagement with said notches by at least one garter spring member (58, 60; 86, 110).

4. The one-way ratchet clutch assembly of claim 3 wherein two garter spring members (58, 60; 86, 110) are utilized.

5. The one-way ratchet clutch assembly of claim 1 or 2 wherein the pawl members are urged toward engagement with said notches by a ribbon spring means (94).

6. The one-way ratchet clutch assembly of claim 5 wherein said pawl members each have an axial extending groove (92) for operatively mating with said ribbon spring means.

7. The one-way ratchet clutch assembly of claim 3 wherein said pawl members each have at least one circumferentially extending groove for positioning of said garter spring member (86).

8. The one-way ratchet clutch assembly of claim 4 wherein said pawl members each have two circumferentially extending grooves (70, 72) for positioning of said two garter spring members (58, 60).

9. The one-way ratchet clutch assembly of claim 1 or 2, wherein the pawl members are urged toward engagement with said notches by at least one coil spring member (140).

10. The one-way ratchet clutch assembly of any one of claims 1 to 9 further comprising annular disc members (62, 64; 100, 112) positioned on opposite sides of said clutch assembly, wherein said disc members assist in axially retaining the pawl members in said pockets.

11. The one-way ratchet clutch assembly of claim 10 wherein one of said disc members (100) includes a plurality of axial extending guide members, (110) said guide members positioned between said inner and outer race members.

12. The one-way ratchet clutch assembly of any one of the previous claims wherein the number of notches (28; 68; 122; 162; 210) is different to the number of pawl members.

## Patentansprüche

1. Klinkeneinwegkupplungseinheit (20; 50; 102) mit
einem Außenringelement (24; 52; 104; 150; 204; 220) mit einer Vielzahl von Taschen (26; 66; 120; 182) ;
einem Innenringelement (22; 54; 106; 160; 212) mit einer Vielzahl von Kerben (28, 68; 122; 162; 210) ;
einer Vielzahl von Klinkenelementen (25; 56; 108; 156; 200), wobei eines der Klinkenelemente frei in jeder Tasche angeordnet ist;
wobei die Klinkenelemente in den Taschen während einer Drehung von einem Ringelement in einer Richtung relativ zum anderen Ringelement gehalten werden und mindestens ein Klinkenelement mit einer der Kerben in Eingriff tritt, wenn sich die Ringelemente relativ zueinander in der entgegengesetzten Richtung drehen; und
Einrichtungen zum Richten der Klinkenelemente auf einen Eingriff mit den Taschen;
wobei die Einrichtungen zum Richten der Klinkenelemente auf einen Eingriff mit den Taschen ein Gratelement (30; 74; 206) auf jedem Klinkenelement, eine entsprechende passende Ausnehmung (40; 76) in jeder Tasche und eine Konfiguration eines jeden Klinkenelementes, die den Massenmittelpunkt (CM) eines Klinkenelementes relativ zum Gratelement so positioniert,.daß die Zentrifugalkraft bewirkt, daß sich das Klinkenelement in Richtung auf die Eingriffsposition bewegt, umfassen, wobei die Ausnehmung (40; 76) in jeder Tasche zwischen zwei Seitenflächen (37, 38) ausgebildet ist, die einen stumpfen Winkel miteinander bilden und für einen Kontakt mit entsprechenden Flächen (32, 34) des Klinkenelementes in der Eingriffsstellung und Außereingriffsstellung derselben angeordnet sind, **dadurch gekennzeichnet, daß** die entsprechenden Flächen (32, 34) miteinander einen stumpfen Winkel bilden, wobei eine abgerundete Ecke dazwischen das Gratelement bildet.

2. Klinkeneinwegkupplungseinheit nach Anspruch 1, bei der in jeder Tasche die Ausnehmung (40; 76) an einen Schwenkgrat am Klinkenelement angepaßt ist und so positioniert ist, daß sie einen Kontakt zwischen den Enden (41, 43) des Klinkenelementes und den Seiten (36, 39) der Taschen während einer Bewegung des Klinkenelementes in Richtung auf die Eingriffsstellung verhindert.

3. Klinkeneinwegkupplungseinheit nach Anspruch 1 oder 2, bei der die Klinkenelemente über mindestens ein in sich geschlossenes ringförmiges Schraubenfederelement (58, 60; 86, 110) in Eingriff mit den Kerben gepreßt werden.

4. Klinkeneinwegkupplungseinheit nach Anspruch 3, bei der zwei in sich geschlossene ringförmige Schraubenfederelemente (58, 60; 86, 110) Verwendung finden.

5. Klinkeneinwegkupplungseinheit nach Anspruch 1 oder 2, bei der die Klinkenelemente über eine Bandfedereinrichtung (94) in Eingriff mit den Kerben gepreßt werden.

6. Klinkeneinwegkupplungseinheit nach Anspruch 5, bei der die Klinkenelemente jeweils eine axial verlaufende Nut (92) zur Anpassung an die Bandfedereinrichtung besitzen.

7. Klinkeneinwegkupplungseinheit nach Anspruch 3, bei der die Klinkenelemente jeweils mindestens eine in Umfangsrichtung verlaufende Nut zur Positionierung des in sich geschlossenen ringförmigen Schraubenfederelementes (86) besitzen.

8. Klinkeneinwegkupplungseinheit nach Anspruch 4, bei der die Klinkenelemente jeweils zwei sich in Umfangsrichtung erstreckende Nuten (70, 72) zur Positionierung der zwei in sich geschlossenen ringförmigen Schraubenfederelemente (58, 60) besitzen.

9. Klinkeneinwegkupplungseinheit nach Anspruch 1 oder 2, bei der die Klinkenelemente über mindestens ein Schraubenfederelement (140) in Eingriff mit den Kerben gepreßt werden.

10. Klinkeneinwegkupplungseinheit nach einem der Ansprüche 1 bis 9, die des weiteren ringförmige Scheibenelemente (62, 64; 100, 112) aufweist, die auf gegenüberliegenden Seiten der Kupplungseinheit angeordnet sind und zum axialen Halten der Klinkenelemente in den Taschen beitragen.

11. Klinkeneinwegkupplungseinheit nach Anspruch 10, bei der eines der Scheibenelemente (100) eine Vielzahl von axial verlaufenden Führungselementen (110) aufweist, die zwischen dem Innenringelement und dem Außenringelement angeordnet sind.

12. Klinkeneinwegkupplungseinheit nach einem der vorangehenden Ansprüche, bei der sich die Zahl der Kerben (28; 68; 122; 162; 210) von der Zahl der Klinkenelemente unterscheidet.

## Revendications

1. Un ensemble d'embrayage à roue libre à rochets (20 ; 50 ; 102) comprenant :
un élément de bague extérieure (24 ; 52 ; 104 ; 150 ; 204 ; 220) comportant une pluralité de poches (26 ; 66 ; 120 ; 182) ;
un élément de bague intérieure (22 ; 54 ; 106 ; 160 ; 212) comportant une pluralité.d'encoches (28 ; 68 ; 122 ; 162 ; 210) ;
une pluralité de d'éléments de rochets (25 ; 56 ; 108 ; 156 ; 200), un des dits éléments de rochets étant librement positionné dans chacune des dites poches :
les dits éléments de rochets étant retenus dans les dites poches pendant la rotation de l'un des dits éléments de bague, et au moins un des dits éléments de rochets étant en prise avec une des dites encoches lorsque les dits éléments de bague tournent l'un par rapport à l'autre dans le sens opposé ; et
un moyen pour diriger les dits éléments de rochets vers l'embrayage avec les dites encoches ;
ledit moyen pour diriger les dits éléments de rochets vers l'embrayage avec les dites encoches comprenant un élément de saillie (30 ; 74 ; 206), sur chacun des éléments de rochets, une gorge conjuguée correspondante (40 ; 76) dans chacune des dites poches, et une configuration de chacun des éléments de rochets qui positionne son centre de masse (CM) par rapport au dit élément de saillie de telle sorte que la force centrifuge fasse se déplacer l'élément de rochet vers d'embrayage, la gorge (40 ; 76) dans chaque poche étant formée entre deux surfaces latérales (37, 38) qui sont placées selon un angle obtus l'une par rapport à l'autre et disposées pour entrer en contact avec les surfaces correspondantes (32, 34) de l'élément de rochet dans ses positions respectives d'embrayage et de débrayage, **caractérisé en ce que** les dites surfaces correspondantes (32, 34) sont placées selon un angle obtus l'une par rapport à l'autre avec un coin arrondi se trouvant entre elles formant l'élément de saillie.

2. Un ensemble d'embrayage à roue libre à rochets selon la revendication 1, dans lequel, dans chaque poche, la gorge (40 ; 76) s'accouple à une saillie de pivot sur l'élément de rochet, la gorge étant positionnée de telle sorte à empêcher le contact entre les extrémités (41, 43) de l'élément de rochet et les côtés (36, 39) des poches pendant le déplacement de l'élément de rochet vers la position d'embrayage.

3. L'ensemble d'embrayage à roue libre à rochets de la revendication 1 ou 2, dans lequel les éléments de rochets sont poussés vers l'embrayage avec les dites encoches par au moins un élément de ressort jarretière (58, 60 ; 86, 110).

4. L'ensemble d'embrayage à roue libre à rochets selon la revendication 3, dans lequel deux ressorts jarretières (58, 60 ; 86, 110) sont utilisés.

5. L'ensemble d'embrayage à roue libre à rochets de la revendication 1 ou 2, dans lequel les éléments de rochets sont poussés vers l'embrayage avec les dites encoches par un élément de ressort à ruban (94).

6. L'ensemble d'embrayage à roue libre à rochets selon la revendication 5, dans lequel les éléments de rochets ont chacun une rainure d'extension axiale (92) pour s'accoupler en fonctionnement au dit moyen de ressort à ruban.

7. L'ensemble d'embrayage à roue libre à rochets selon la revendication 3, dans lequel les dits éléments de rochets ont chacun au moins une rainure d'extension circonférentielle pour positionner ledit élément de ressort jarretière (86).

8. L'ensemble d'embrayage à roue libre à rochets selon la revendication 4, dans lequel les dits éléments de rochets ont chacun deux rainures d'extension circonférentielle (70, 72) pour positionner les dits deux éléments de ressorts jarretière (58 60).

9. L'ensemble d'embrayage à roue libre à rochets de la revendication 1 ou 2, dans lequel les éléments de rochets sont poussés vers l'embrayage avec les dites encoches par au moins un élément de ressort hélicoïdal.

10. L'ensemble d'embrayage à roue libre à rochets selon l'une quelconque des revendications 1 à 9, comprenant en outre des éléments de disques annulaires (62, 64 ; 100, 112) placés sur des côtés opposés du dit ensemble d'embrayage, dans lequel les dits éléments de disques aident à retenir axialement les éléments de rochets dans les dites poches.

11. L'ensemble d'embrayage à roue libre à rochets selon la revendication 10, dans lequel un des dits-éléments de disques (100) comporte une pluralité d'éléments de guides d'extension axiale (110), les dits éléments de guides étant placés entre les dits éléments de bague intérieure et extérieure.

12. L'ensemble d'embrayage à roue libre à rochets selon l'une quelconque des revendications précédentes, dans lequel le nombre d'encoches (28 ; 68 ; 122 ; 162 ; 210) diffère du nombre d'éléments de rochets.
